Europäisches Patentamt

European Patent Office

Office européen des brevets

(11) Veröffentlichungsnummer: **0 409 061 A2**

# EUROPÄISCHE PATENTANMELDUNG

(21) Anmeldenummer: **90113232.4**

(22) Anmeldetag: **11.07.90**

(51) Int. Cl.5: **G01N 21/31**

(30) Priorität: **21.07.89 DE 3924060**

(43) Veröffentlichungstag der Anmeldung:
**23.01.91 Patentblatt 91/04**

(84) Benannte Vertragsstaaten:
**DE FR GB IT**

(71) Anmelder: **BODENSEEWERK PERKIN-ELMER GMBH
Askaniaweg 4
D-7770 Uberlingen/Bodensee(DE)**

(72) Erfinder: **Wulf, Jürgen, Dr.
Langgasse 22
D-7770 Überlingen(DE)**

(74) Vertreter: **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
D-5620 Velbert 11 Langenberg(DE)**

(54) **Atomabsorptions-Spektralphotometer für die Multielementanalyse.**

(57) Bei einem Atomabsorptions-Spektralphotometer für die Multielementanalyse wird das Licht von Lichtquellen (1o, 12, 14, 16), welche die Resonanzlinien je eines gesuchten Elements emittieren über Lichtleiter (26, 28, 3o, 32) und in integrierter Optik ausgeführte optische Koppler (34) überlagert. Das Licht wird auf einen Polychromator (64) geleitet.

Fig. 1

# ATOMABSORPTIONS-SPEKTRALPHOTOMETER FÜR DIE MULTIELEMENTANALYSE

## Technisches Gebiet

Die Erfindung betrifft einen Atomabsorptions-Spektralphotometer zur gleichzeitigen Messung der Atomabsorption bei einer Mehrzahl von Elementen, enthaltend

(a) eine Mehrzahl von linienemittierenden Lichtquellen, von denen jede die Resonanzlinien eines oder mehrerer gesuchter Elemente emittiert.

(b) Mittel zur Überlagerung der von den linienemittierenden Lichtquellen ausgehenden Strahlung zu einem Meßlichtbündel,

(c) eine Atomisierungsvorrichtung zur Atomisierung einer untersuchten Probe und zur Erzeugung eines Atomdampfes, in welchem die gesuchten Elemente aus der Probe in atomarer Form vorliegen,

(d) optische Mittel zum Hindurchleiten des Meßlichtbündels durch den Atomdampf und

(e) Detektormittel zum getrennten Erfassen der Absorptionen, denen die Resonanzlinien der verschiedenen gesuchten Elemente in der Probe unterworfen sind.

## Zugrundeliegender Stand der Technik

Bei der Atomabsorptions-Spektroskopie wird eine Probe durch eine Flamme oder durch einen elektrisch beheizten Ofen atomisiert, so daß die in der Probe enthaltenen Elemente in atomarem Zustand auftreten. Durch den so gebildeten Atomdampf wird ein Meßlichtbündel von einer Lichtquelle hindurchgeschickt, welche charakteristische Resonanzlinien eines gesuchten Elements emittiert. Die Atome absorbieren jeweils nur Strahlung mit den für jeweils ein Element charakteristischen Resonanzlinien. Licht mit anderen Wellenlängen wird von den Atomen des Atomdampfes nicht absorbiert. Das Meßlichtbündel erfährt dadurch eine Absorption, die ein Maß für die Anzahl der Atome des gesuchten Elements in dem Atomdampf liefert.

Als Lichtquelle dient dabei üblicherweise eine Hohlkathodenlampe, in welcher eine Gasentladung mit den Atomen des gesuchten Elements stattfindet. Diese Hohlkathodenlampe emittiert dann das Spektrum des gesuchten Elements. Durch einen Monochromator wird aus diesem Spektrum eine bestimmte Resonanzlinie ausgewählt. Das Meßlichtbündel mit dieser Resonanzlinie fällt auf einen photoelektrischen Detektor, üblicherweise einen Photomultiplier. Mit einer solchen Anordnung kann jeweils nur ein einziges Element gemessen werden.

Es sind Atomabsorptions-Spektralphotometer bekannt, bei denen mehrere verschiedene Hohlkathodenlampen auf einem drehbaren Träger angeordnet sind. Von diesem Hohlkathodenlampen wird jeweils eine in eine Arbeitsstellung gebracht, in welcher sie das Meßlichtbündel erzeugt. Damit können nacheinander verschiedene Elemente gemessen werden. Das bedingt aber eine relativ lange Meßzeit. Bei Analysen mit elektrothermischer Atomisierung der Probe in einem elektrisch beheizten Ofen muß für jede Bestimmung eine gesonderte Probe in den Ofen eingebracht werden.

Die DE-OS 33 04 110 betrifft ein Vielkanalspektrometer, bei dem weißes Licht spektral zerlegt und Licht bestimmter Wellenlängenbereiche mittels Lichtleitern durch eine oder mehrere Durchflußküvetten geleitet wird und auf einen Detektor fällt. Am Anfang der Lichtleiter kann auch eine verstellbare Selektorplatte vorgesehen sein, mittels derer Licht eines bestimmten Wellenlängenbereiches ausgewählt und durch einen weiteren, einer Durchfluß küvette zugeordneten Lichtleiter weitergeleitet wird.

Die veröffentlichte PCT-Anmeldung WO 86/05877 betrifft eine Anordnung von mehreren Linienstrahlern, deren Strahlung durch einen Blendenschieber nacheinander auf einen gemeinsamen Meßstrahlengang geleitet wird. Der Meßstrahlengang enthält zwischen einem Polarisator und einem Analysator eine Phasenverschiebeplatte, die durch eine Schaltungsanordnung gesteuert wird, an der das Ausgangssignal eines Detektors liegt, der über einen Teilerspiegel mit dem Licht des Meßstrahlengangs beaufschlagt ist. Die Phasenverschiebeplatte wird so gesteuert, daß stets die gleiche Lichtintensität durch den Meßstrahlengang auf eine Absorptionskammer fällt.

Die DE-OS 32 30 657 betrifft einen optischen Multiplexer in Form eines integrierten optischen Bauelementes mit einer Zentralbahn und von dieser abzweigenden Zweigbahnen, die unter einem Mündungswinkel von ca. $1,5^\circ$ in die Zentralbahn einmünden, aber sonst parallel zur Zentralbahn verlaufen. Durch Faltung an einer Spiegelebene läßt sich die Zahl der Anschlüsse vergrößern. Das Element kann sowohl zur Aufteilung eines Strahls, als auch zur Vereinigung von Teilstrahlen dienen.

Die DE-OS 36 08 468 beschreibt eine Vorrichtung zur Multielementanalyse, bei der durch rotierende Sektor- oder Parallelspiegel die Strahlung mehrerer Hohlkathodenlampen nacheinander auf einen gemeinsamen Strahlengang geleitet wird. In einer weiteren Anordnung sind die Hohlkathodenlampen auf dem Rowlandkreis eines Beugungsgitters angeordnet, so daß deren Strahlung gleichzeitig auf einen gemeinsamen Strahlengang geleitet wird. Nach dem Durchtritt durch die Probe fällt die Strahlunhg auf einen Polychromator.

Die Veröffentlichung von W. Slatin behandelt unter dem Titel "The present and future of graphite furnace atomic absorption spectroscopy" in der Zeitschrift "trends in analytical chemistry", Jahrgang 6, Heft 8, Seiten 194 bis 204 (1987) Vorrichtungen zur Multielementanalyse, bei denen weißes Licht mit Hilfe eines Gittermonochromators in elementspezifische Strahlungen zerlegt wird, die auf getrennte, den jeweiligen Elementen zugeordnete Detektoren fallen. In einer anderen, der vorstehend beschriebenen ähnlichen Anordnung werden die Strahlen von elementspezifischen Lichtquellen mittels eines Beugungsgitters gemeinsam durch eine Flamme geleitet und danach durch ein weiteres Beugungsgitter wieder zerlegt und elementspezifischen Detektoren zugeführt.

Das englische Patent 1 474 466 betrifft eine Vorrichtung zur Multielementanalyse mittels Flammenspektroskopie, bei der die Strahlung von mehreren elementspezifischen Lampen mittels teildurchlässiger Spiegel gleichzeitig auf einen gemeinsamen Strahlengang geleitet wird, der durch die Flamme zu einem gesteuert auf verschiedene Wellenlängen einstellbaren Monochromator führt.

Die DE-OS 33 23 726 betrifft ein Verfahren zur Herstellung eines Y-Abzweigs eines verlustarmen optischen Bauelementes, bei dem zunächst der Grundkörper mit den Lichtleitern der Y-Abzweige verlustarm und dann mit einem weiteren Grundkörper verlustarm zusammengefügt wird, der den Lichtleiter des Y-Stamms enthält.

Die DE-OS 32 08 260 betrifft eine aus zwei Lichtquellen, einem optischen Mischer in Gestalt eines Prismas und Lichtleitern bestehende Einrichtung zum Übertragen und Verteilen von Lichtstrahlung beispielsweise zur Beleuchtung von Geräteskalen oder, unter Zwischenschaltung optoelektrischer Wandler, zur Ansteuerung von Thyristoren, auch in geschlossenen, mit gasförmigen oder flüssigen Dielektrika gefüllten Gehäusen bei Hochspannungsschaltungen. Dabei ist eine Überwachungsschaltung für die emittierte Strahlunhg der einzelnen Lichtquellen oder der Gesamtstrahlung vorgesehen.

Die US-PS 4 764 343 betrifft einen optischen Sauerstoffsensor zur Bestimmung von Sauerstoff in Automobilabgasen auf Grund von Änderungen in den Refektionseigenschaften des Sensors. Dazu wird der im Abgas angeordnete Sensor unter Ausbildung eines Temperaturgradienten beheizt, und zwar durch eine Heizlichtquelle und gleichzeitig durch eine elektrisch modulierte Beleuchtungslichtquelle belichtet. Der Heizlichtstrahl und der Belichtungslicht strahl werden durch optische Fasern einem optischen 3 : 1-Koppler zugeführt und danach durch eine optische Faser auf den Sensor fokussiert. Aus dem optischen 3 : 1-Koppler wird reflektiertes Licht ausgekoppelt und auf einen Photodetektor geleitet.

Die US.PS 4 752 125 betrifft eine Vorrichtung zur Messung der Dispersion in optischen Fasern vorgegebener Länge. Dazu werden Laserpulse vorgegebener Wellenlänge gleichzeitig oder nacheinander durch einen Koppler auf die optische Faser gegeben, die am Ausgang der Faser eintreffenden Laserpulse detektiert und deren Fortpflanzungsgeschwindigkeit bestimmt.

Die DE-OS 33 24 674 betrifft ein Verfahren zur Herstellung eines kompakten integrierten elektrooptischen Bauelementes. Darin sind auf einer Glasplatte Dünnfilmschaltungen zur Steuerung von Halbleiterlasern aufgebracht, die über ein Prisma mit zugehörigen Gradientenstablinsen jeweils an Lichtleiterbahnen gekoppelt sind. Die Lichtleiterbahnen bestehen aus einer zentralen Lichtleiterbahn und aus Paaren von an gegenüberliegenden Seiten in Längsabstand voneinander in die zentrale Lichtleiterbahn einmündenden Lichtleiterbahnen.

Keine der vorstehenden Druckschriften zeigt ein Atomabsorptions-Spektralphotometer, bei dem das Licht mehrerer elementspezifischer Lichtquellen gleichzeitig mittels eines optischen Kopplergliedes und eines Lichtleiters der Atomisierungsvorrichtung zugeführt wird. So ist aus der GB-PS 1 474 466 eine Anordnung zur Flammenspektroskopie bekannt, bei der die von den elementspezifischen Lichtquellen ausgehenden Strahlen über teildurchlässige Spiegel auf einen gemeinsamen Strahlengang und durch eine Linse auf die Flamme geleitet werden. Diese Anordnung besitzt den Nachteil, daß die Lichtintensität mit zunehmender Anzahl der teildurchlässigen Spiegel zunehmend stärker geschwächt wird. Aus der DE-OS 36 08 468 ist ein Atomabsorptions-Spektralphotometer nach dem Oberbegriff des Patentanspruches bekannt, bei dem das Licht von auf dem Rowland-Kreis eines Beugungsgitters angeordneten elementspezifischen Lichtquellen durch das Beugungsgitter auf einen gemeinsamen Strahlengang und durch die Probe zu einem Polychromator geleitet wird. Diese Anordnung ist unerwünscht kompliziert wegen der hohen Präzision, die für die Positionierung der Lampe erforderlich ist, und des Beugungsgitters, das das Licht auf den gemeinsamen Strahlengang leitet. Ein Y-konfiguriertes Kopplungsglied ist nur in Verbindung der Lichtleiternachrichtentechnik bzw. der optischen Datenübertragung durch Lichtleiter aus der DE-OS 33 23 726 bekannt.

**Offenbarung der Erfindung**

Der Erfindung liegt die Aufgabe zugrunde, ein Atomabsorptions-Spektralphotometer der eingangs genannten Art zur gleichzeitigen Messung der Atomabsorption bei einer Mehrzahl von Elementen so auszubilden, daß ohne in welcher sie das Meßlichtbündel erzeugt. Damit können nacheinander verschiedene Elemente gemessen werden. Das bedingt aber eine relativ lange Meßzeit. Bei Analysen mit elektrothermischer Atomisierung der Probe in einem elektrisch beheizten Ofen muß für jede Bestimmung eine gesonderte Probe in den Ofen eingebracht werden.

Es ist bekannt, Meßlichtbündel von mehreren Hohlkathodenlampen zu überlagern, so daß ein Meßlichtbündel erhalten wird, das die Linienspektren mehrerer gesuchter Elemente enthält. Ein Polychromator mißt mit verschiedenen Detektoren einzelne charakteristische Resonanzlinien der verschiedenen gesuchten Elemente. Auf diese Weise können gleichzeitig mehrere Elemente in einer Probe analysiert werden. Nach dem Stand der Technik werden die Meßlichtbündel von den verschiedenen Hohlkathodenlampen durch teildurchlässige Spiegel überlagert. Dabei ergeben sich jedoch so starke Lichtverluste, daß die Anzahl der verwendbaren Hohlkathodenlampen und damit der gleichzeitig zu analysierenden Elemente stark begrenzt ist.

Es ist bekannt, Lichtbündel mittels einer integrierten Optik zu überlagern. Die integrierte Optik enthält dabei Y-förmige Lichtleiterstrukturen. Zu überlagernde Lichtbündel werden über lichtleitende Fasern auf eintrittseitige Lichtleiter übertragen, die jeweils Y-förmig zu einem austrittseitigen Lichtleiter zusammengeführt sind.

## Offenbarung der Erfindung

Der Erfindung liegt die Aufgabe zugrunde, ein Atomabsorptions-Spektralphotometer der eingangs genannten Art zur gleichzeitigen Messung der Atomabsorption bei einer Mehrzahl von Elementen so auszubilden, daß ohne unzulässig hohe Lichtverluste die Meßlichtbündel von einer größeren Anzahl von linienemittierenden Quellen überlagert werden können.

Erfindungsgemäß wird diese Aufgabe dadurch gelöst, daß

(f) Licht von dieser Lichtquelle in einen zugeordneten Lichtleiter geleitet wird, der in dem benutzten Spektralbereich nicht absortiert,

(g) die Mittel zur Überlagerung der Strahlung von optischen Kopplermitteln gebildet sind, durch welche die den verschiedenen Lichtquellen zugeordneten Lichtleiter mit einem gemeinsamen Ausgangslichtleiter gekoppelt sind und

(h) der Ausgangslichtleiter zu der Atomisierungsvorrichtung geführt ist.

Die Überlagerung der Meßlichtbündel erfolgt nach der Erfindung somit nicht über Spiegel. Vielmehr wird jedes Meßlichtbündel in einen Lichtleiter, z.B. eine lichtleitende Faser geleitet. Diese Lichtleiter sind dann durch optische Kopplermittel mit einem Ausgangslichtleiter verbunden. Dieser ist zu der Atomisierungsvorrichtung geführt. Dabei treten keine sich multiplizierende Lichtverluste auf, wie dies bei der Überlagerung von Lichtbündeln über teildurchlässige Spiegel der Fall ist.

Die optischen Kopplermittel können eine integrierte Optik enthalten, in welcher eintrittseitige Lichtleiter paarweise Y-förmig zu einem austrittseitigen Lichtleiter zusammengeführt sind. Die eintrittseitigen Lichtleiter sind dann mit lichtleitenden Fasern verbunden, die zu je einer Lichtquelle geführt sind, wobei diese lichtleitenden Fasern die besagten zugeordneten Lichtleiter darstellen. Der zu der Atomisierungsvorrichtung geführte Ausgangslichtleiter ist mit einem austrittseitigen Lichtleiter der integrierten Optik verbunden. Auf diese Weise können die Lichtströme in den verschiedenen lichtleitenden Fasern mit geringen Verlusten überlagert werden. Die integrierte Optik kann mehrere Stufen von Y-förmig zusammengeführten Lichtleitern enthalten, wobei jeweils die austrittseitigen Lichtleiter einer eintrittseitigen Stufe einen eintrittseitigen Lichtleiter der austrittseitig nächstfolgenden Stufe bildet.

Die Detektormittel können von einem Polychromator gebildet sein.

Ein Ausführungsbeispiel der Erfindung ist nachstehend unter Bezugnahme auf die zugehörigen Zeichnungen näher erläutert.

## Kurze Beschreibung der Zeichnungen

Fig. 1 ist eine schematische Darstellung eines Atomabsorptions-Spektralphotometers zur gleichzeitigen Messung der Atomabsorption bei einer Mehrzahl von Elementen.

Fig. 2 ist eine perspektivische Darstellung und zeigt die als Kopplermittel dienende integrierte Optik mit den den Lichtquellen zugeordneten Lichtleitern und dem zur Atomisierungsvorrichtung geführten Ausgangslichtleiter.

## Bevorzugte Ausführung der Erfindung

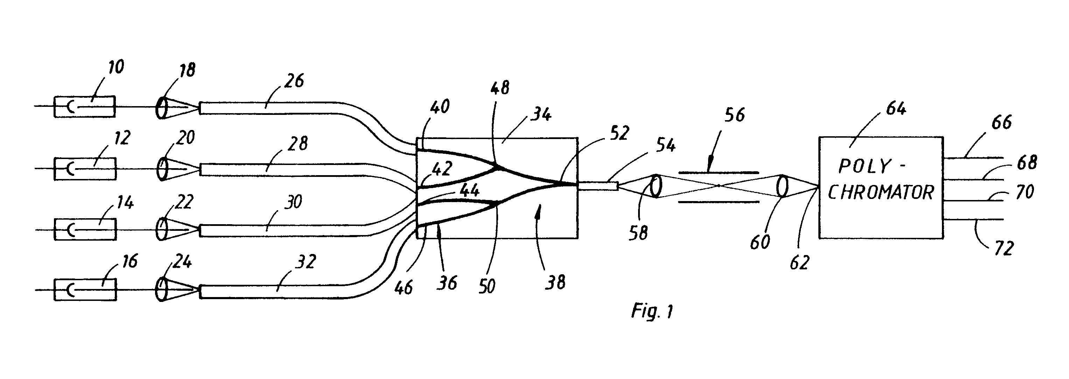

In Fig.1 sind vier linienemittierende Lichtquellen 10,12,14 und 16 in Form von Hohlkathodenlampen vorgesehen. Jede der Lichtquellen 10,12,14 und 16 emittiert ein Linienspektrum, das für ein bestimmtes gesuchtes Element charakteristisch ist. Die vier Lichtquellen 10,12,14 und 16 sind unterschiedlichen Elementen zugeordnet. Das von den Lichtquellen 10,12,14 und 16 ausgehende Licht wird durch eine Sammellinse 18,20,22 bzw. 24 auf der Stirnfläche je eines zugeordneten Lichtleiters 26,28,30 bzw. 32 gesammelt. Die verschiedenen Meßlichtbündel werden auf diese Weise durch die Lichtleiter 26,28,30 und 32 geführt.

Mit 34 sind Kopplermittel bezeichnet, die hier als eine integrierte Optik ausgebildet sind. Die integrierte Optik der Kopplermittel enthält zwei Stufen 36 und 38 von Y-förmig zusammengeführten Lichtleitern. In der ersten Stufe 36 sind vier eintrittseitige Lichtleiter 40,42,44 und 46 paarweise Y-förmig zu einem austrittseitigen Lichtleiter 48,50 zusammengeführt. Die beiden eintrittseitigen Lichtleiter 40 und 42 sind Y-förmig zu dem austrittseitigen Lichtleiter 48 zusammengeführt. Die beiden eintrittseitigen Lichtleiter 44 und 46 sind Y-förmig zu dem austrittseitigen Lichtleiter 50 zusammengeführt. Die austrittseitigen Lichtleiter 48 und 50 der ersten Stufe 36 bilden die eintrittseitigen Lichtleiter der austrittseitigen nächstfolgenden Stufe 38, die Y-förmig zu einem austrittseitigen Lichtleiter 52 zusammengeführt sind.

Die eintrittseitigen Lichtleiter 40,42,44 und 46 sind mit je einer der lichtleitenden Fasern 26,28,30 bzw. 32 verbunden, die zu je einer der Lichtquellen 10,12,14,16 geführt sind und die diesen zugeordneten Lichtleiter darstellen. Der austrittseitige Lichtleiter 52 der integrierten Optik 34 ist mit einem Ausgangslichtleiter 54 verbunden, der zu der Atomisierungsvorrichtung 56 geführt ist.

Die Atomisierungsvorrichtung 56 ist ein üblicher Graphitofen für die elektrothermische Atomisierung der Probe. Durch eine Linse 58 wird das aus dem Ausgangslichtleiter 54 austretende Lichtbündel im Zentrum des Graphitofens fokussiert. Eine Linse 60 auf der Austrittsseite des Graphitofens sammelt das Lichtbündel auf dem Eintrittsspalt 62 eines Polychromators 64. Der Polychromator 64 erzeugt in bekannter Weise ein Spektrum, welches die Linienspektren der vier Lichtquellen 10,12,14 und 16 enthält. Am Ort charakteristischer Resonanzlinien der gesuchten Elemente sitzen Detektoren, welche Signale an Ausgängen 66,68,70 und 72 liefern.

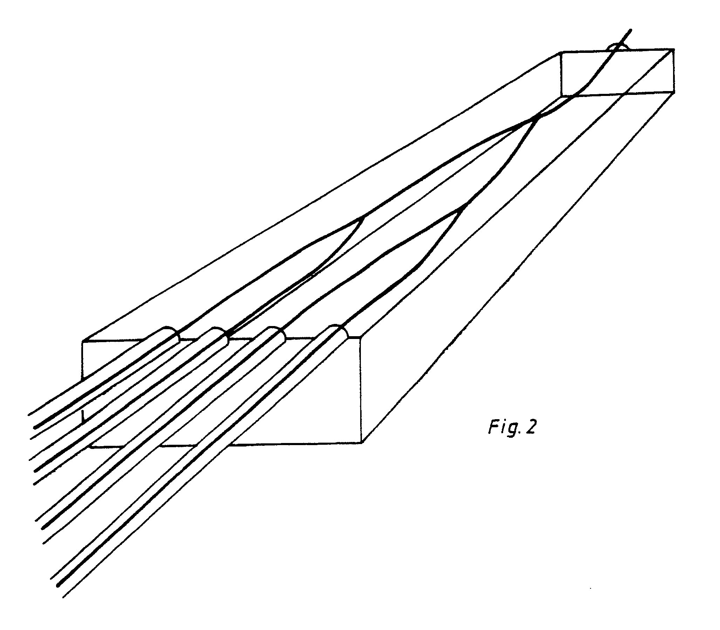

Fig.2 ist eine perspektivische Darstellung der als Kopplermittel 34 dienenden integrierten Optik und der damit verbundenen lichtleitenden Fasern 26,28,30 und 32 bzw. 54.

## Ansprüche

1. Atomabsorptions-Spektralphotometer zur gleichzeitigen Messung der Atomabsorption bei einer Mehrzahl von Elementen, enthaltend
(a) eine Mehrzahl von linienemittierenden Lichtquellen (10,12,14,16), von denen jede die Resonanzlinien eines oder mehrerer gesuchter Elemente emittiert,
(b) Mittel zur Überlagerung der von den linienemittierenden Lichtquellen ausgehenden Strahlung zu einem Lichtbündel,
(c) eine Atomisierungsvorrichtung (56) zur Atomisierung einer untersuchten Probe und zur Erzeugung eines Atomdampfes, in welchem die gesuchten Elemente aus der Probe in atomarer Form vorliegen,
(d) optische Mittel (54,58,60) zum Hindurchleiten des Meßlichtbündels durch den Atomdampf und
(c) Detektormitel (64) zum getrennten Erfassen der Absorptionen, denen die Resonanzlinien der verschiedenen gesuchten Elemente in der Probe unterworfen sind,
dadurch gekennzeichnet, daß
(f) Licht von jeder Lichtquelle (10,12,14,16) in einen zugeordneten Lichtleiter (26,28,30,32) geleitet wird, der in dem benutzten Spektralbereich nicht absorbiert,
(g) die Mittel zur Überlagerung der Strahlung von optischen Kopplermitteln (34) gebildet sind, durch welche die den verschiedenen Lichtquellen (10,12,14,16) zugeordneten Lichtleiter (26,28,30,32) mit einem gemeinsamen Ausgangslichtleiter (54) gekoppelt sind, und
(h) der Ausgangslichtleiter (54) zu der Atomisierungsvorrichtung (56) geführt ist.

2. Atomabsorptions-Spektralphotometer nach Anspruch 1, dadurch gekennzeichnet, daß
(a) die optischen Kopplermittel (34) eine integrierte Optik enthalten, in welcher eintrittseitige Lichtleiter paarweise (40,42; 44,46; bzw. 58,50) Y-förmig zu einem austrittseitigen Lichtleiter (48,50 bzw. 52) zusammengeführt sind, und
(b) eintrittseitige Lichtleiter (40,42,44,46) mit lichtleitenden Fasern verbunden sind, die zu je einer Lichtquelle (10,12,14,16) geführt sind, wobei diese lichtleitenden Fasern die besagten zugeordneten Lichtleiter (26,28,30,32) darstellen, und
(c) der Ausgangslichtleiter (54) mit einem austrittseitigen Lichtleiter (52) verbunden ist.

3. Atomabsorptions-Spektralphotometer nach Anspruch 2, dadurch gekennzeichnet, daß die integrierte Optik mehrere Stufen (36,38) von Y-förmig zusammengeführten Lichtleitern (40,42; 44,46 bzw. 58,50) enthält, wobei jeweils die austrittseitigen Lichtleiter (48,50) einer eintrittseitigen Stufe (36) einen eintrittseitigen Lichtleiter der austrittseitig nächstfolgenden Stufe (38) bildet.

4. Atomabsorptions-Spektralphotometer nach einem der Ansprüche 1 bis 3, dadurch gekennzeichnet, daß die Detektormittel von einem Polychromator (64) gebildet sind.

Fig. 1

EP 0 409 061 A2

Fig. 2